# EUROPÄISCHE PATENTSCHRIFT

(11) **EP 3 428 391 B1**
(45) Veröffentlichungstag und Bekanntmachung des Hinweises auf die Patenterteilung: **11.09.2019**
(21) Anmeldenummer: 17181379.3
(22) Anmeldetag: 14.07.2017
(51) Int. Cl.: F01D 5/14, F01D 5/22, F01D 9/04

(54) **TURBOMASCHINEN-SCHAUFELGITTER**
BLADE GRID OF A TURBOMACHINE
GRILLE D'AUBE D'UNE TURBOMACHINE

(43) Veröffentlichungstag der Anmeldung: 16.01.2019
(73) Patentinhaber: MTU Aero Engines AG, 80995 München (DE)
(72) Erfinder: Mahle, Inga, 77880 Sasbach (DE); Brettschneider, Markus, 85757 Karlsfeld (DE); Maatouk, Fadi, 80807 München (DE)

(56) Entgegenhaltungen:
- EP-A1- 2 746 533
- EP-A1- 2 835 499
- EP-A1- 3 179 036
- EP-A2- 2 423 444
- WO-A1-2014/105102
- DE-A1-102008 021 053
- US-A1- 2010 143 139

## Beschreibung

Die vorliegende Erfindung betrifft ein Schaufelgitter für eine Turbomaschine, insbesondere eine Turbinen-oder Verdichterstufe einer Gasturbine, eine Turbomaschinenstufe, insbesondere Turbinen- oder Verdichterstufe einer Gasturbine, und eine Turbomaschine, insbesondere Gasturbine, mit dem Schaufelgitter sowie ein Verfahren zum Auslegen und /oder Herstellen des Schaufelgitters.

Die DE 10 2008 021 053 A1 offenbart eine Verdichter- und/oder Turbinenstufe einer Axialströmungsmaschine mit einer Anzahl von eine Saugseite sowie eine Druckseite aufweisenden Schaufeln, die an ihren radial inneren und/oder äußeren Enden mit einer Nabe und/oder Außenwand verbunden sind, wobei die Nabe und/oder Außenwand einen Strömungspfad zwischen jeweils zwei benachbarten Schaufeln radial begrenzen und die Außenseite der Nabe und/oder die Innenseite der Außenwand einen konvexen Abschnitt auf der Saugseite angrenzend an die Profilnase der Schaufel sowie einen konkaven Abschnitt unmittelbar stromab zum konvexen Abschnitt auf der Saugseite der Schaufel hat
Die WO 2014/105102A1 offenbart eine Gasturbinentriebswerkskomponente, die ein Schaufelblatt und eine Plattform aufweist, wobei das Schaufelblatt eine Druckseite und eine gegenüberliegende Saugseite aufweist, die Plattform mit dem Schaufelblatt verbunden ist und eine der Druckseite benachbarte erste gekrümmte Kante und eine von der Druckseite beabstandete zweite gekrümmte Kante aufweist, wobei mehr als die Hälfte der Plattform zur Druckseite angeordnet ist, und wobei die zur Druckseite angeordnete Plattform eine nicht-achsensymmetrische Oberflächenkonturierung aufweist.

Die EP 3 179 036 A1 offenbart einen Schaufelring für eine Gasturbine, insbesondere Fluggasturbine, mit mehreren Schaufeln, die in Umfangsrichtung nebeneinander angeordnet sind, wobei die Schaufeln einen sich im Wesentlichen in radialer Richtung erstreckenden Strömungsabschnitt aufweisen mit einer konvexen Saugseite (16), einer konkaven Druckseite (14), einer Vorderkante (18) und einer Hinterkante (20), wobei die Saugseite und die Druckseite durch die Vorderkante und die Hinterkante miteinander verbunden sind, wobei die Schaufeln radial innen und/oder radial außen in einen Ringabschnitt des Schaufelrings übergehen, wobei der Ringabschnitt eine erste Schaufel und eine zweite Schaufel, die zueinander benachbart sind, zwischen der Saugseite der ersten Schaufel und der Druckseite der zweiten Schaufel verbindet, und wobei der Ringabschnitt als konturierte Fläche ausgebildet ist mit in radialer Richtung unterschiedlichen Höhen, wobei der Ringabschnitt einen höchsten Flächenabschnitt und einen tiefsten Flächenabschnitt aufweist, wobei der höchste Flächenabschnitt direkt angrenzend an die Druckseite der zweiten Schaufel ausgebildet ist.

Die EP 2 746 533 A1 offenbart ein Schaufelgitter einer Strömungsmaschine, das zumindest eine schaufelblattseitige in der Nähe einer Seitenwand angeordnete und sich stromab erstreckende Formvariation eines Schaufelblattes und zumindest eine Seitenwandkonturierung der Seitenwand oder zumindest eine seitenwandnahe zweite Formvariation eines benachbarten Schaufelblattes aufweist, sowie eine Strömungsmaschine.

Die EP 2 835 499 A1 offenbart ein Schaufelgitter einer Strömungsmaschine, dessen zumindest eine Seitenwandung in Umfangsrichtung wellenartig ausgebildet ist und zumindest zwei Erhebungen und zumindest eine Senke oder zumindest zwei Senken und zumindest eine Erhebung aufweist, sowie eine Strömungsmaschine mit einem derartigen Schaufelgitter.

Die US 2010/143139 A1 offenbart eine Turbinenlaufschaufel mit einem Schaufelblatt und einer integralen Plattform an dessen Fuß, wobei die Plattform von einem der Druckseite des Schaufelblattes benachbarten Wall zu einer Senke höhenkonturiert ist, die hinter der Vorderkante des Schaufelblattes aanfängt.

Die EP 2 42 344 4 A2 offenbart eine Turbinendüse mit einem Gitter an Turbinenleitschaufeln zwischen einem inneren und äußeren Band, wobei jede Schaufel gegenüberliegende Druck- und Saugseiten aufweist, die sich zwischen genüberliegenden Vorder- und Hinterkanten erstrecken, die Schaufeln eine Mehrzahl von Strömungspassagen definieren, die jeweils durch das inneren und äußeren Band und angrenzende erste und zweite Schaufeln begrenzt sind, eine Oberfläche des inneren Band in jeder der Passagen in einer nicht-achsensymmetrischen Form konturiert ist, die eine Spitze von relativ höherer radialer Höhe angrenzend an die Druckseite der ersten Schaufel angrenzend deren Vorderkante aufweist, und eine Senke von relativ niedrigerer radialer Höhe parallel zur Saugseite der zweiten Schaufel und von dieser beabstandet hinter deren Vorderkante angeordnet ist, wobei die Spitze und Senke gemeinsam einen gebogenen Kanal definieren, der sich axial längs des inneren Bandes zwischen den ersten und zweiten Schaufel erstreckt.

Eine Aufgabe einer Ausführung der vorliegenden Erfindung ist es, ein Turbomaschinen-Schaufelgitter zu verbessern.

Diese Aufgabe wird durch ein Schaufelgitter mit den Merkmalen des Anspruchs 1 gelöst. Ansprüche 9-11 stellen eine Turbomaschinenstufe, insbesondere eine Turbinen- oder Verdichterstufe einer Gasturbine, und eine Turbomaschine, insbesondere eine Gasturbine, mit einem oder mehreren hier beschriebenen Schaufelgittern bzw. Stufen sowie ein Verfahren zu dessen Auslegung und/oder Herstellung unter Schutz. Vorteilhafte Ausführungsformen der Erfindung sind Gegenstand der Unteransprüche. Nach einer Ausführung der vorliegenden Erfindung weist (wenigstens) ein Schaufelgitter für eine, insbesondere einer, Turbomaschine, insbesondere für eine, insbesondere einer, Turbinen- oder Verdichterstufe einer Gasturbine, zwei oder mehr Schaufeln auf, die in einer Ausführung in einer Umfangsrichtung (der Turbomaschine) nebeneinander angeordnet und deren einander zugewandte Druck- und Saugseite(n jeweils) durch wenigstens eine (radial) konturierte Mantelfläche verbunden sind.

In einer Ausführung sind die Schaufeln Leitschaufeln, die fest oder einstellbar mit einem Gehäuse der Turbomaschine(nstufe) verbunden sind. In einer anderen Ausführung sind die Schaufeln Laufschaufeln, die an einem Rotor der Turbomaschine(nstufe) angeordnet sind.

Solche Schaufelgitter stellen eine besonders vorteilhafte Anwendung der vorliegenden Erfindung dar.

In einer Ausführung ist die konturierte Mantelfläche eine radial innere Mantelfläche, insbesondere eine radial innen an den Schaufeln angeordnete Mantelfläche, insbesondere eine schaufelzugewandte Mantel- bzw. Oberfläche eines (radial) inneren Deckbandes oder des Rotors. In einer anderen Ausführung ist die konturierte Mantelfläche eine radial äußere Mantelfläche, insbesondere eine radial außen an den Schaufeln angeordnete Mantelfläche, insbesondere eine schaufelzugewandte Mantel- bzw. Oberfläche eines (radial) äußeren Deckbandes oder des Gehäuses. In einer Ausführung begrenzt die konturierte Mantelfläche einen Strömungskanal zwischen den Schaufeln bzw. deren Druck- und Saugseiten radial, insbesondere innen oder außen. Zusätzlich oder alternativ können Druck- und Saugseite auch (jeweils) durch wenigstens eine weitere, insbesondere konturierte, Mantelfläche verbunden bzw. der Strömungskanal zwischen den Schaufeln bzw. deren Druck- und Saugseiten radial (außen bzw. innen) begrenzt sein.

In einer Ausführung wird das Schaufelgitter durch einzelne Schaufelsegmente gebildet, wobei jedes Schaufelsegment genau eine, genau zwei, genau drei, genau vier, genau fünf oder auch mehr Schaufeln umfassen kann, die vorzugsweise jeweils einstückig und integral miteinander verbinden sind. Dementsprechend kann die konturierte Mantelfläche zwischen jeweils zwei benachbarten Schaufeln geteilt sein, beispielsweise durch einen Segmentspalt zwischen zwei aneinander angrenzende plattformen benachbarter Schaufeln verschiedener Schaufelsegmente, oder kann ungeteilt sein, beispielsweise zwischen zwei benachbarten Schaufeln desselben Schaufelsegments.

Solche Mantelflächen bzw. Schaufelgitter stellen eine besonders vorteilhafte Anwendung der vorliegenden Erfindung dar.

Nach einer Ausführung der vorliegenden Erfindung weist die konturierte Mantelfläche, in einer Weiterbildung auch die weitere konturierte Mantelfläche jeweils, einen stromaufwärtigen bzw. schaufelvorderkantenseitigen ersten Abschnitt und einen stromabwärtigen bzw. schaufelhinterkantenseitigen zweiten Abschnitt auf, der in einer (radialen) Höhenlinie bzw. Linie gleicher radialer Höhe bzw. gleichen radialen Abstands zu einer Rotations- bzw. (Haupt)Maschinenachse der Turbomaschine(nstufe) an den ersten Abschnitt angrenzt bzw., insbesondere glatt, in den ersten Abschnitt übergeht, die daher vorliegend auch als Grenzlinie bezeichnet wird, wobei der erste Abschnitt gegenüber einer, insbesondere zu einer Rotations- bzw. (Haupt)Maschinenachse der Turbomaschine(nstufe), rotationssymmetrischen, Referenzfläche, die diese Höhen- bzw. Grenzlinie aufweist und in einer Ausführung zylinder- oder kegel(stumpf)förmig ist, (radial) von den Schaufeln weg, insbesondere also bei einer radial inneren Mantelfläche nach radial innen bzw. bei einer radial äußeren Mantelfläche nach radial außen, abgesenkt ist, und wobei der zweite Abschnitt gegenüber dieser Referenzfläche nicht von den Schaufeln weg abgesenkt ist, insbesondere wenigstens bereichsweise mit der Referenzfläche übereinstimmt oder gegenüber dieser zu den Schaufeln hin erhöht ist.

Durch eine solche lokale Absenkung können in einer Ausführung insbesondere Sekundär- und/oder Kühlluftströmungen, insbesondere (Sekundär)Strömungsverluste und/oder Wirkungsgrade der Turbomaschine(nstufe) verbessert werden.

Nach einer Ausführung der vorliegenden Erfindung liegt diese Höhen- bzw. Grenzlinie in einem axialen Bereich, der höchstens bzw. spätestens 30%, insbesondere höchstens bzw. spätestens 25%, einer axialen Breite einer der Schaufeln bzw. eines axialen Abstands zwischen ihrer Vorder- und Hinterkante stromabwärts (von) ihrer Vorderkante endet bzw. sich von der Vorderkante einer der Schaufeln gesehen stromabwärts höchstens bis (zu) 30%, insbesondere höchstens 25%, einer axialen Breite dieser Schaufel bzw. eines axialen Abstands zwischen ihrer Vorder- und Hinterkante erstreckt.

In einer Ausführung beginnt dieser axiale Bereich, in dem diese Höhenlinie liegt, wenigstens bzw. frühestens 2,5%, insbesondere wenigstens bzw. frühestens 5%, und/oder höchstens bzw. spätestens 15%, insbesondere höchstens bzw. spätestens 10%, einer bzw. der axialen Breite (einer) der Schaufel(n) stromabwärts ihrer Vorderkante bzw. erstreckt sich dieser axiale Bereich, in dem diese Höhenlinie liegt, von wenigstens bzw. frühestens 2,5%, insbesondere wenigstens bzw. frühestens 5%, und/oder höchstens bzw. spätestens 15%, insbesondere höchstens bzw. spätestens 10%, einer bzw. der axialen Breite (einer) der Schaufel(n) an stromabwärts ihrer Vorderkante.

In einer Ausführung beträgt ein minimaler axialer Abstand der Höhen- bzw. Grenzlinie von der Vorderkante einer der Schaufeln somit wenigstens 2,5%, insbesondere wenigstens 5%, und/oder höchstens 15%, insbesondere höchstens 10%, einer axialen Breite dieser Schaufel bzw. eines axialen Abstands zwischen ihrer Vorder- und Hinterkante. Zusätzlich oder alternativ beträgt in einer Ausführung ein maximaler axialer Abstand der Höhen- bzw. Grenzlinie von der Vorderkante einer der Schaufeln höchstens 35%, insbesondere höchstens 25%, einer axialen Breite dieser Schaufel bzw. eines axialen Abstands zwischen ihrer Vorder- und Hinterkante.

Zusätzlich vergrößert sich nach einer Ausführung der vorliegenden Erfindung ein axialer Abstand dieser Höhen- bzw. Grenzlinie von bzw. zu der Vorderkante einer der Schaufeln, ausgehend von einem vorderkantennächsten Punkt zwischen Druckseite und Saugseite der Schaufeln, der in einer Ausführung in einem mittleren Drittel der Höhen- bzw. Grenzlinie liegt, sowohl zur Druckseite als auch zur Saugseite hin, in einer Ausführung stetig, insbesondere stetig differenzierbar und/oder monton, insbesondere streng monoton. Die Höhen- bzw. Grenzlinie ist in einer Ausführung knickfrei und/oder, insbesondere durchgehend, zur Vorderkante der Schaufeln hin konvex. Zusätzlich oder alternativ erstreckt sie sich in einer Ausführung von der Druckseite bis zu der Saugseite. Sie kann somit in einer Ausführung sichelförmig bzw. -artig ausgebildet sein.

Zusätzlich erstreckt sich nach einer Ausführung der vorliegenden Erfindung der abgesenkte erste Abschnitt, der von dieser bzw. durch diese Höhen- bzw. Grenzlinie stromabwärtig bzw. schaufelhinterkantenseitig begrenzt wird bzw. ist, (in Umfangsrichtung) über wenigstens 90% des Zwischenraums zwischen der Druckseite und der Saugseite, in einer Ausführung von der Druckseite der einen Schaufel und/oder bis zu der Saugseite der anderen Schaufel, insbesondere (durchgehend) von der Druckseite der einen Schaufel bis zu der Saugseite der anderen Schaufel.

Es hat sich überraschend herausgestellt, dass durch einen solchen abgesenkten Mantelflächenabschnitt mit einer solcherart geformten und angeordneten Höhen- bzw. Grenzlinie Sekundär- und/oder Kühlluftströmungen, insbesondere (Sekundär)Strömungsverluste und/oder Wirkungsgrade der Turbomaschine(nstufe) besonders vorteilhaft verbessert werden können.

In einer Ausführung erstreckt sich der erste Abschnitt, welcher gegenüber der Referenzfläche (radial) von den Schaufeln weg abgesenkt ist, bis zu einem stromaufwärtigen bzw. schaufelvorderkantenseitigen Stirnrand der konturierten Mantelfläche. Mit anderen Worten ist in einer Ausführung die gesamte konturierte Mantelfläche von ihrem stromaufwärtigen bzw. vorderkantenseitigen Stirnrand bis zu der Höhen- bzw. Grenzlinie abgesenkt. Hierdurch kann in einer Ausführung die Herstellung vereinfacht werden.

In einer anderen Ausführung weist die konturierte Mantelfläche einen weiteren Abschnitt auf, der stromaufwärts an den ersten Abschnitt anschließt und gegenüber der Referenzfläche wenigstens bereichsweise nicht von den Schaufeln weg abgesenkt ist. Mit anderen Worten ist in einer Ausführung die konturierte Mantelfläche zwischen ihrem stromaufwärtigen bzw. vorderkantenseitigen Stirnrand und dem abgesenkten ersten Abschnitt nicht (durchgehend) bzw. nicht (durchgehend) von ihrem vorderkantenseitigen bzw. stromaufwärtigen Stirnrand bis zu der Höhen- bzw. Grenzlinie abgesenkt. Hierdurch können in einer Ausführung Sekundär- und/oder Kühlluftströmungen, insbesondere (Sekundär)Strömungsverluste und/oder Wirkungsgrade der Turbomaschine(nstufe) (weiter) verbessert werden.

In einer Ausführung variiert die Absenkung gegenüber der Referenzfläche in dem ersten Abschnitt in Axialrichtung. Zusätzlich oder alternativ variiert in einer Ausführung die Absenkung gegenüber der Referenzfläche in dem ersten Abschnitt in Umfangsrichtung. Hierdurch können in einer Ausführung Sekundär- und/oder Kühlluftströmungen, insbesondere (Sekundär)Strömungsverluste und/oder Wirkungsgrade der Turbomaschine(nstufe) (weiter) verbessert werden.

In einer Ausführung weist die konturierte Mantelfläche einen dritten Abschnitt auf, der stromabwärts an den zweiten Abschnitt anschließt und gegenüber der Referenzfläche in einem oder mehreren Bereichen (jeweils) von den Schaufeln weg abgesenkt und/oder in einem oder mehreren Bereichen (jeweils) zu den Schaufeln hin erhöht ist. Hierdurch können in einer Ausführung Sekundär- und/oder Kühlluftströmungen, insbesondere (Sekundär)Strömungsverluste und/oder Wirkungsgrade der Turbomaschine(nstufe) (weiter) verbessert werden.

Nach einer Ausführung der vorliegenden Erfindung wird die konturierte Mantelfläche (jeweils) derart ausgelegt und/oder hergestellt, dass sie wie hier beschrieben ausgebildet ist, insbesondere also den hier beschriebenen abgesenkten ersten Abschnitt sowie den in der Höhen- bzw. Grenzlinie an diesen stromabwärtig angrenzenden bzw. -schließenden, nicht abgesenkten zweiten Abschnitt aufweist.

Eine bzw. die axiale Richtung im Sinne der vorliegenden Erfindung ist in einer Ausführung parallel zu einer Rotations- bzw. (Haupt)Maschinenachse der Turbomaschine(nstufe), eine bzw. die Umfangsrichtung entsprechend insbesondere eine Rotationsrichtung der Turbomaschine(nstufe), eine bzw. die radiale Richtung in einer Ausführung senkrecht zur axialen und Umfangsrichtung.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert, die einzige:

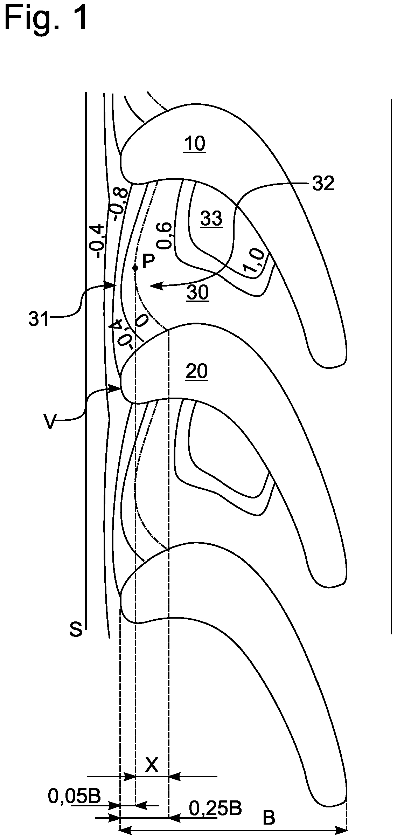

- Fig. 1: einen Teil eines Schaufelgitters einer Turbomaschine nach einer Ausführung der vorliegenden Erfindung in einer Abwicklung bzw. radialen Draufsicht.

Fig. 1 zeigt einen Teil eines Schaufelgitters einer Turbomaschine nach einer Ausführung der vorliegenden Erfindung in einer Abwicklung oder radialen Draufsicht von radial innen oder außen.

Man erkennt in dem Ausschnitt der Fig. 1 eine Schaufel 10, deren Druckseite (unten in Fig. 1) durch eine Mantelfläche 30, auf die man in Fig. 1 von oben blickt, mit einer Saugseite (oben in Fig. 1) einer in Umfangsrichtung (vertikal in Fig. 1) benachbarten Schaufel 20 verbunden ist.

Die Mantelfläche 30 ist radial, d.h. senkrecht zur Bildebene der Fig. 1, konturiert und weist eine Höhenlinie auf, die in Fig. 1 strichpunktiert dargestellt und durch "0" (links von dieser Höhenlinie) bezeichnet ist.

Die Mantelfläche 30 weist einen stromaufwärtigen bzw. schaufelvorderkantenseitigen (links in Fig. 1) ersten Abschnitt 31 auf, der stromabwärtig bzw. schaufelhinterkantenseitig (rechts in Fig. 1) durch diese Höhenlinie "0" begrenzt wird bzw. ist, und der gegenüber einer rotationssymmetrischen Referenzfläche, die diese Höhenlinie "0" aufweist, von den Schaufeln weg (d.h. in die Bildebene der Fig. 1 hinein) abgesenkt ist.

Um dies zu verdeutlichen, sind in Fig. 1 zwei weitere Linien in diesem abgesenkten ersten Abschnitt 31, die gegenüber der Referenzfläche die gleiche radiale Absenkung von (-)0,4 mm aufweisen, sowie eine weitere Linie gleicher radialer Absenkung von (-)0,8 mm in diesem abgesenkten ersten Abschnitt 31 eingezeichnet.

Die Mantelfläche 30 weist einen stromabwärtigen bzw. schaufelhinterkantenseitigen (rechts in Fig. 1) zweiten Abschnitt 32 auf, der in der Höhenlinie "0" an bzw. in den abgesenkten ersten Abschnitt 31 grenzt bzw. übergeht, und der gegenüber der rotationssymmetrischen Referenzfläche nicht abgesenkt ist.

Die Mantelfläche 30 weist zudem einen dritten Abschnitt 33 auf, der stromabwärts (nach rechts in Fig. 1) an den zweiten Abschnitt 32 anschließt, und der gegenüber der rotationssymmetrischen Referenzfläche erhöht ist.

Zur Verdeutlichung sind in Fig. 1 eine Linie gleicher radialer Erhöhung von (+)0,6 mm und eine weitere Linie gleicher radialer Erhöhung von (+)1,0 mm gegenüber der Referenzfläche in dem dritten Abschnitt 33 eingezeichnet.

Diese Linien gleicher Absenkung bzw. Erhöhung gegenüber der Referenzfläche sind in Fig. 1 jeweils durch die links neben ihnen angeordneten Zahlenwerte der Absenkung bzw. Erhöhung bezeichnet.

Zudem ist in Fig. 1 die axiale Breite B der Schaufel 20 sowie ein axialer Bereich X eingezeichnet, der sich von 5% dieser axialen Breite B bis 25% dieser axialen Breite B der Schaufel 20 stromabwärts ihrer Vorderkante V erstreckt.

Man erkennt, dass die Höhenlinie "0", in der der nicht abgesenkte zweite Abschnitt 32 an den abgesenkten ersten Abschnitt 31 angrenzt, in diesem axialen Bereich X liegt, ein axialer Abstand (horizontal in Fig. 1) dieser sichelförmigen Höhenlinie "0" von der Vorderkante V der Schaufel 20 sich ausgehend von einem vorderkantennächsten Punkt P, d.h. einem Punkt P auf der Höhenlinie "0" mit einem in axiale Richtung geringstem Abstand von der Vorderkante, zwischen Druckseite und Saugseite sowohl zur Druckseite als auch zur Saugseite hin vergrößert und der abgesenkte Abschnitt 31 sich durchgehend von der Druckseite der Schaufel 10 bis zu der Saugseite der Schaufel 20 erstreckt.

Im Ausführungsbeispiel erstreckt sich der abgesenkte Abschnitt 31 nicht bis zu einem schaufelvorderkantenseitigen Stirnrand S der konturierten Mantelfläche. In einer nicht dargestellten Abwandlung kann er sich jedoch auch bis zum schaufelvorderkantenseitigen Stirnrand S erstrecken.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10, 20: Schaufel
- 30: Mantelfläche
- 31: abgesenkter erster Abschnitt
- 32: nicht abgesenkter zweiter Abschnitt
- 33: dritter Abschnitt
- B: axiale Schaufelbreite
- P: vorderkantennächster Punkt
- S: stromaufwärtiger Stirnrand
- V: Vorderkante
- X: axialer Bereich

## Patentansprüche

1. Schaufelgitter für eine Turbomaschine, nämlich eine Turbinen- oder Verdichterstufe einer Gasturbine, das wenigstens zwei Schaufeln (10, 20) und wenigstens eine konturierte Mantelfläche (30) aufweist, die eine Druckseite der einen Schaufel mit einer Saugseite der anderen Schaufel verbindet, **dadurch gekennzeichnet, dass** die konturierte Mantelfläche (30) einen stromaufwärtigen ersten Abschnitt (31) und einen stromabwärtigen zweiten Abschnitt (32) aufweist, der in einer Höhenlinie (0) an den ersten Abschnitt angrenzt, wobei der erste Abschnitt (31) gegenüber einer rotationssymmetrischen Referenzfläche, die diese Höhenlinie aufweist, radial von den Schaufeln weg abgesenkt ist und der zweite Abschnitt (32) gegenüber dieser Referenzfläche nicht radial von den Schaufeln weg abgesenkt ist, wobei diese Höhenlinie (0) in einem axialen Bereich (X), der höchstens 30% einer axialen Breite (B) einer der Schaufeln stromabwärts ihrer Vorderkante (V) endet, liegt, diese axiale Breite (B) einem axialen Abstand zwischen der Vorder- und Hinterkante der Schaufel entspricht, und ein axialer Abstand dieser Höhenlinie (0) von der Vorderkante (V) einer der Schaufeln sich ausgehend von einem vorderkantennächsten Punkt (P) zwischen Druckseite und Saugseite zur Druckseite und zur Saugseite hin vergrößert und der erste Abschnitt (31) sich über wenigstens 90% des Zwischenraums zwischen der Druckseite und der Saugseite erstreckt.

2. Schaufelgitter nach Anspruch 1, **dadurch gekennzeichnet, dass** der abgesenkte erste Abschnitt (31) sich bis zu einem stromaufwärtigen Stirnrand (S) der konturierten Mantelfläche erstreckt.

3. Schaufelgitter nach Anspruch 1, **dadurch gekennzeichnet, dass** die konturierte Mantelfläche einen weiteren Abschnitt aufweist, der stromaufwärts an den ersten Abschnitt (31) anschließt und gegenüber der Referenzfläche wenigstens bereichsweise nicht von den Schaufeln weg abgesenkt ist.

4. Schaufelgitter nach einem der vorhergehenden Ansprüche, **dadurch gekennzeichnet, dass** der axiale Bereich (X), in dem diese Höhenlinie liegt, wenigstens 2,5% und/oder höchstens 15% einer axialen Breite (B) einer der Schaufeln stromabwärts ihrer Vorderkante (V) beginnt.

5. Schaufelgitter nach einem der vorhergehenden Ansprüche, **dadurch gekennzeichnet, dass** die Absenkung gegenüber der Referenzfläche in dem ersten Abschnitt in Axial- und/oder Umfangsrichtung variiert.

6. Schaufelgitter nach einem der vorhergehenden Ansprüche, **dadurch gekennzeichnet, dass** die konturierte Mantelfläche einen dritten Abschnitt aufweist, der stromabwärts an den zweiten Abschnitt anschließt und gegenüber der Referenzfläche wenigstens bereichsweise von den Schaufeln weg abgesenkt und/oder wenigstens bereichsweise zu den Schaufeln hin erhöht ist.

7. Schaufelgitter nach einem der vorhergehenden Ansprüche, **dadurch gekennzeichnet, dass** die Schaufeln Leit- oder Laufschaufeln sind.

8. Schaufelgitter nach einem der vorhergehenden Ansprüche, **dadurch gekennzeichnet, dass** die konturierte Mantelfläche eine radial innere oder äußere Mantelfläche ist.

9. Turbomaschinenstufe, nämlich Turbinen- oder Verdichterstufe einer Gasturbine, mit wenigstens einem Schaufelgitter nach einem der vorhergehenden Ansprüche.

10. Turbomaschine, nämlich Gasturbine, mit wenigstens einem Schaufelgitter nach einem der vorhergehenden Ansprüche.

11. Verfahren zum Auslegen und/oder Herstellen eines Schaufelgitters nach einem der vorhergehenden Ansprüche, wobei die konturierte Mantelfläche derart ausgelegt bzw. hergestellt wird, dass der erste Abschnitt gegenüber der Referenzfläche radial von den Schaufeln weg abgesenkt ist und der zweite Abschnitt gegenüber der Referenzfläche nicht radial von den Schaufeln weg abgesenkt ist, und die Höhenlinie, in der der zweite Abschnitt stromabwärts an den ersten Abschnitt angrenzt, in einem axialen Bereich, der höchstens 30% einer axialen Breite einer der Schaufeln stromabwärts ihrer Vorderkante endet, liegt, diese axiale Breite (B) einem axialen Abstand zwischen der Vorder- und Hinterkante der Schaufel entspricht, und ein axialer Abstand dieser Höhenlinie von der Vorderkante einer der Schaufeln sich ausgehend von einem vorderkantennächsten Punkt zwischen Druckseite und Saugseite zur Druckseite und zur Saugseite hin vergrößert und der erste Abschnitt sich über wenigstens 90% des Zwischenraums zwischen der Druckseite und der Saugseite erstreckt.

## Claims

1. Blade cascade for a turbomachine, specifically a turbine stage or compressor stage of a gas turbine, which comprises at least two blades (10, 20) and at least one contoured lateral surface (30) which connects a pressure side of one blade to a suction side of the other blade, **characterized in that** the contoured lateral surface (30) has an upstream first portion (31) and a downstream second portion (32) which is adjacent to the first portion in a contour line (0), the first portion (31) being radially lowered away from the blades with respect to a rotationally symmetrical reference surface having this contour line, and the second portion (32) not being radially lowered away from the blades with respect to this reference surface, this contour line (0) lying in an axial region (X) which terminates at most 30% of an axial width (B) of one of the blades, downstream of its leading edge (V), this axial width (B) corresponding to an axial spacing between the leading and trailing edge of the blade, and an axial spacing from this contour line (0) to the leading edge (V) of one of the blades increasing starting from a point (P), nearest the leading edge, between the pressure side and suction side, toward the pressure side and the suction side, and the first portion (31) extending over at least 90% of the gap between the pressure side and the suction side.

2. Blade cascade according to claim 1, **characterized in that** the lowered first portion (31) extends as far as an upstream end edge (S) of the contoured lateral surface.

3. Blade cascade according to claim 1, **characterized in that** the contoured lateral surface has a further portion which adjoins the first portion (31) upstream and is not lowered, at least in regions, away from the blades with respect to the reference surface.

4. Blade cascade according to any of the preceding claims, **characterized in that** the axial region (X) in which this contour line lies begins at least 2.5% and/or at most 15% of an axial width (B) of one of the blades, downstream of its leading edge (V).

5. Blade cascade according to any of the preceding claims, **characterized in that** the lowering with respect to the reference surface in the first portion varies in the axial and/or circumferential direction.

6. Blade cascade according to any of the preceding claims, **characterized in that** the contoured lateral surface has a third portion, which adjoins the second portion downstream and is lowered, at least in regions, relative to the reference surface, away from the blades and/or raised toward the blades, at least in regions.

7. Blade cascade according to any of the preceding claims, **characterized in that** the blades are guide vanes or moving blades.

8. Blade cascade according to any of the preceding claims, **characterized in that** the contoured lateral surface is a radially inner or outer lateral surface.

9. Turbomachine stage, specifically a turbine stage or compressor stage of a gas turbine, comprising at least one blade cascade according to any of the preceding claims.

10. Turbomachine, specifically a gas turbine, comprising at least one blade cascade according to any of the preceding claims.

11. Method for designing and/or producing a blade cascade according to any of the preceding claims, wherein the contoured lateral surface is designed or produced in such a way that the first portion is lowered radially away from the blades with respect to the reference surface and the second section is not lowered radially away from the blades with respect to the reference surface, and the contour line, in which the second portion adjoins the first portion downstream, lies in an axial region that terminates at most 30% of an axial width of one of the blades downstream of its leading edge, this axial width (B) corresponding to an axial spacing between the leading edge and trailing edge of the blade, and an axial spacing from this contour line to the leading edge of one of the blades increases from a point, nearest the leading edge, between the pressure side and the suction side toward the pressure side and the suction side and the first portion extends over at least 90% of the gap between the pressure side and the suction side.

## Revendications

1. Grille d'aube pour une turbomachine, notamment un étage de turbine ou de compresseur d'une turbine à gaz, présentant au moins deux aubes (10, 20) et au moins une surface d'enveloppe profilée (30), laquelle surface d'enveloppe relie un côté refoulement d'une aube à un côté aspiration de l'autre aube, **caractérisée en ce que** la surface d'enveloppe profilée (30) présente une première section amont (31) et une deuxième section (32) aval), laquelle deuxième section est adjacente à la première section dans une ligne de crête (0), la première section (31) étant abaissée à l'écart des aubes par rapport à une surface de référence à symétrie de rotation présentant ladite ligne de crête et la deuxième section (32) n'étant pas abaissée radialement à l'écart des aubes par rapport à ladite surface de référence, ladite ligne de crête (0) étant se trouvant dans une zone axiale (X) se terminant au plus à 30 % d'une largeur axiale (B) de l'une des aubes en aval de son bord avant (V), ladite largeur axiale (B) correspondant à une distance axiale entre les bords avant et arrière de l'aube, et une distance axiale de ladite ligne de crête (0) par rapport au bord avant (V) de l'une des aubes augmentant à partir d'un point (P) le plus proche du bord avant entre le côté refoulement et le côté aspiration vers le côté refoulement et vers le côté aspiration et la première section (31) s'étendant sur au moins 90 % de l'espace intermédiaire se trouvant entre le côté refoulement et le côté aspiration.

2. Grille d'aube selon la revendication 1, **caractérisée en ce que** la première section abaissée (31) s'étend jusqu'à un bord frontal amont (S) de la surface d'enveloppe profilée.

3. Grille d'aube selon la revendication 1, **caractérisée en ce que** la surface d'enveloppe profilée présente une autre section qui rejoint la première section (31) en amont et qui n'est pas abaissée, au moins par zone, à l'écart des aubes par rapport à la surface de référence.

4. Grille d'aube selon l'une des revendications précédentes, **caractérisée en ce que** la zone axiale (X), dans laquelle se trouve ladite ligne de crête, commence au moins à 2,5 % et/ou au plus à 15 % d'une largeur axiale (B) de l'une des aubes en aval de son bord avant (V).

5. Grille d'aube selon l'une des revendications précédentes, **caractérisée en ce que** l'abaissement par rapport à la surface de référence dans la première section varie suivant la direction axiale et/ou circonférentielle.

6. Grille d'aube selon l'une des revendications précédentes, **caractérisée en ce que** la surface d'enveloppe profilée présente une troisième section, laquelle troisième section rejoint la deuxième section en aval et est abaissée à l'écart des aubes, au moins par zone, par rapport à la surface de référence et/ou est relevée vers les aubes, au moins par zone, par rapport à la surface de référence.

7. Grille d'aube selon l'une des revendications précédentes, **caractérisée en ce que** les aubes sont des aubes de guidage ou des aubes de rotor.

8. Grille d'aube selon l'une des revendications précédentes, **caractérisée en ce que** la surface d'enveloppe profilée est une surface d'enveloppe radialement intérieure ou extérieure.

9. Etage de turbomachine, notamment étage de turbine ou de compresseur d'une turbine à gaz, comportant au moins une grille d'aubes selon l'une des revendications précédentes.

10. Turbomachine, notamment turbine à gaz, comportant au moins une grille d'aubes selon l'une des revendications précédentes.

11. Procédé de conception et/ou de fabrication d'une grille d'aubes selon l'une des revendications précédentes, dans lequel la surface d'enveloppe profilée est conçue ou fabriquée de sorte que la première section est abaissée radialement à l'écart des aubes par rapport à la surface de référence et la deuxième section n'est pas abaissée radialement à l'écart des aubes par rapport à la surface de référence, et la ligne de crête, dans laquelle la deuxième section est adjacente à la première section en aval, se trouve dans une zone axiale se terminant au plus à 30 % d'une largeur axiale de l'une des aubes en aval de son bord avant, ladite largeur axiale (B) correspond à une distance axiale entre les bords avant et arrière de l'aube, et une distance axiale de ladite ligne de crête à partir du bord avant de l'une des aubes augmente à partir d'un point le plus proche du bord avant entre le côté refoulement et le côté aspiration vers le côté refoulement et vers le côté aspiration, et la première section s'étend sur au moins 90 % de l'espace se trouvant entre le côté refoulement et le côté aspiration.
